# EUROPEAN PATENT SPECIFICATION

(11) **EP 3 770 453 B1**
(45) Date of publication and mention of the grant of the patent: **13.09.2023**
(21) Application number: 19771435.5
(22) Date of filing: 13.02.2019
(51) Int. Cl.: F16C 33/54, F16C 19/36, F16C 19/46, F16C 43/06, F16C 19/26

(54) **ROLLER BEARING CAGE**
WÄLZLAGERKÄFIG
CAGE POUR PALIER À ROULEAUX

(30) Priority: 20.03.2018 JP 2018052551; 07.02.2019 JP 2019020466
(43) Date of publication of application: 27.01.2021
(73) Proprietor: Nakanishi Metal Works Co., Ltd., Osaka-shi, Osaka 530-8566 (JP)
(72) Inventor: YABUBAYASHI Yasuki, Osaka-shi, Osaka 530-8566 (JP); FUKADA Shogo, Osaka-shi, Osaka 530-8566 (JP); HOSOKAWA Tomomi, Osaka-shi, Osaka 530-8566 (JP); KAMETA Seiji, Osaka-shi, Osaka 530-8566 (JP); TESHIMA Kenji, Osaka-shi, Osaka 530-8566 (JP)
(74) Representative: Betten & Resch
(86) International application number: PCT/JP2019/004995
(87) International publication number: WO 2019/181282

(56) References cited:
- EP-A1- 1 262 256
- EP-A1- 2 623 803
- WO-A1-2017/208908
- JP-A- 2005 076 809
- JP-A- 2005 076 809
- JP-A- 2006 029 371
- JP-A- 2007 170 562
- JP-A- 2009 047 294
- JP-A- 2017 044 281
- JP-Y- S4 512 483

## Description

### TECHNICAL FIELD

The present invention relates to a roller bearing cage provided with a plurality of pocket holes for housing conical rollers or cylindrical rollers, which are aligned at equal intervals in the circumferential direction.

### BACKGROUND ART

As a bearing capable of supporting a radial load and a thrust load, conical roller bearings have been widely used in rotation support parts of devices such as drive devices, gear reducers, and power transmission devices, in various industrial machines.

Such a conical roller bearing has a large flange and a small flange respectively provided in the large diameter side and the small diameter side, in the axial direction, of a cone-shaped outer raceway surface of an inner ring. The conical roller bearing includes: a plurality of conical rollers located between the cone-shaped outer raceway surface of the inner ring and a cone-shaped inner raceway surface of an outer ring; and a conical roller bearing cage for holding the conical rollers at equal intervals in the circumferential direction.

As the conical roller bearing cage, a pressed cage that is formed by pressing a steel plate such as a cold-rolled steel plate or a hot-rolled steel plate is generally used.

When the conical rollers and the cage are set in the inner ring, it is necessary to avoid interference between the small flange in the small diameter side of the inner ring and the conical rollers. Thus, following steps are needed: the cage is formed through a pressing process to have a regular shape and size; a bottom-enlarging process (bottom-pressing process) for expanding a part of a column, which is close to the small-diameter ring, in the cage is performed; the cage with this state and the conical rollers are set in the inner ring; and then a swaging process for swaging the cage to be restored into the regular shape is performed (for example, see the description in paragraph 0004 of Patent Literature 1).

A cylindrical roller bearing in which cylindrical rollers are incorporated as rolling elements is suitable for high-speed rotation. Accordingly, the cylindrical roller bearings have been widely used for rotation support parts, such as main shafts of machine tools including a lathe, a milling machine, and a machining center.

The cylindrical roller bearing cage includes an inner-ring guiding cage having columns that individually have central annular portions (1a, 14a) positioned in the radially outside of a pitch circle diameter of cylindrical rollers (6, 13); and side annular portions (1b, 14b) formed by being bent toward the radially inside to be positioned at approximately the same position of the pitch circle diameter of the cylindrical rollers (6, 13) at opposite ends of each column (for example, see Patent Literature 2).

In this inner-ring guiding cage, retentions (2 or 15) which are opposite to each other with a distance shorter than the diameter of each of the cylindrical rollers (6, 13), project from the central annular portions (1a, 14a) of the column. In this situation, the cylindrical rollers (6, 13) are inserted into pocket holes from the radially outside, while the roller retentions (2, 2 or 15, 15) opposite to each other in the circumferential direction in the pockets (3, 16) are elastically deformed.

### CITATION LIST

### PATENT LITERATURE

Patent Literature 1: Japanese Unexamined Patent Application Publication No. 2000-266063
Patent Literature 2: Japanese Examined Utility Model Publication No. Hei. 3-2733 JP 2005 076809 A discloses the preamble of claim 1.
   WO 2017/208908 represents related art.

### SUMMARY OF THE INVENTION

### PROBLEMS TO BE SOLVED BY THE INVENTION

In the roller bearing cages as in Patent Literatures 1 and 2, it is difficult for rollers to be inserted from the radially outside of the pocket holes. This causes the work efficiency in assembling the roller bearings to be poor.

In addition, in the cylindrical roller bearing cage in Patent Literature 2, the roller retentions are formed at the center of each of the columns that underwent a step-forming process to have a stepped shape toward the central annular portion. Here, the central annular portions are located to have the diameter larger than the pitch circle diameter. This causes the intervals between the roller retentions opposite to each other to vary largely, and the diameters of a circle circumscribing the cylindrical rollers attached to the inner ring also vary largely. Accordingly, it is difficult to attach an outer ring to an intermediate assembly of a cylindrical roller bearing in which the inner ring, the cylindrical rollers, and the cage are integrated as shown in FIGS. 4 and 8 of Patent Literature 2.

Furthermore, in the state where the rollers serving as rolling elements are attached to the inner ring of the roller bearing, it is difficult to take out the rollers. This causes the maintenance performance of the roller bearing to be poor.

In the conical roller bearing cage as in Patent Literature 1, it is required, in order to set the conical rollers and the cage in the inner ring of the conical roller bearing, that columns of the cage are plastically deformed twice by a bottom-enlarging process and a swaging process after the cage is formed to have a predetermined size.

This requires man-hours for adjustment, and may adversely affect the precision and strength of the cage.

For a large conical roller bearing, in particular, the sizes of molds for expanding and swaging processes increase, and large pressing machines necessary for such processes are required. Accordingly, the manufacturing cost increases.

If the inner-ring guiding cage as disclosed in Patent Literature 2 is applied to a conical roller bearing to prepare a conical roller bearing cage, conical rollers are to be guided by the cage and the inner ring. In this situation, if pocket holes in the conical roller bearing cage are formed by a punching process, the direction along which the pocket holes are formed with a punch or a die is not perpendicular to a side surface of the cage having a cup shape.

Thus, it is difficult to form the pocket holes of the conical roller bearing cage by the punching process. This causes the manufacturing cost to increase.

In the conical roller bearing cage prepared by applying the inner-ring guiding cage as in Patent Literature 2 to a conical roller bearing as well as the cylindrical roller bearing cage as in Patent Literature 2, each of the columns of the cage has a central annular portion located in the radially outside of the pitch circle diameter. Thus, the columns cross the pitch circle diameter.

Accordingly, the width of each of the columns of the roller bearing cage is reduced. This may cause a problem in terms of the strength, and may cause the columns to be unmoldable.

Furthermore, rollers may be retained by retentions projecting from the central annular portion of the column. In this case, the intervals between the respective retentions easily vary due to deformation during the step-forming process or the punching process. In a large roller bearing, in particular, it may be difficult for rollers to be inserted in pocket holes from the radially outside thereof.

In view of the aforementioned situation, an object of the present invention is to provide a roller bearing cage that is excellent in the assembly-work efficiency and maintenance performance, and is free from a problem in terms of the strength caused by columns with reduced width. In addition, if the roller bearing cage of the present invention is applied to a conical roller bearing cage, a bottom-enlarging process and a swaging process which take time for adjustment and may adversely affect the precision of the cage can be eliminated.

### SOLUTION TO THE PROBLEMS

For solving the above problems, the roller bearing cage according to the present invention is a roller bearing cage for rotatably holding, at a predetermined interval, rollers serving as rolling elements of a roller bearing, the roller bearing cage being provided with a plurality of pocket holes at equal intervals in a circumferential direction for housing the rollers, in which
a plurality of columns connect a pair of rings that are apart from each other in an axial direction,
each of the columns, which is positioned between the pocket holes adjacent to each other, includes:
   a center guide portion for guiding the rollers, the center guide portion being positioned at an axially center of the column in a radially outside of a pitch circle diameter of the rollers; and
   a pair of end portions each of which is connected to the center guide portion at one end and to a corresponding one of the rings at the other end in the radially outside of the center guide portion,
each of the end portions of the column has a retaining projection so that the retaining projection is positioned, in each of the pocket holes, diagonally opposite to another retaining projection.

According to the present invention, an axial-direction relief portion is provided, in each of the pocket holes, diagonally opposite to another axial-direction relief portion in a corner of the pocket hole where the retaining projection is provided, and
a circumferential-direction relief portion is provided, in each of the pocket holes, diagonally opposite to another circumferential-direction relief portion in a corner of the pocket hole where no retaining projection is provided.

According to these configurations, the roller can be inserted from the radially outside of the pocket hole with being inclined to avoid the retaining projections which are diagonally positioned, so as to be easily attached to the inner ring. This improves the assembly-work efficiency of the roller bearing.

In addition, if the outer ring is removed even with the rollers being attached to the inner ring, the roller can be removed with being inclined to avoid the retaining projections which are diagonally positioned. Therefore, the roller bearing can be easily decomposed and maintained.

The center guide portion and a pair of end portions, all of which form the column, are positioned in the radially outside of the pitch circle diameter of the rollers. Accordingly, the column is not reduced in its width, so that no problem may be raised in terms of the strength and moldability.

Furthermore, the column is formed of the center guide portion and a pair of the end portions positioned in the radially outside of the center guide portion. With such a stepped shape of the column, a contact area of the columns with the conical rollers is smaller than that of a cage having a regular shape.

This allows lubricant oil to pass through, thereby increasing the lubricity. Accordingly, the torque can be reduced.

Regarding a conical roller bearing cage, the bottom-enlarging process and swaging process are not needed, and no further mon-hour is not needed for adjustment. Accordingly, the manufacturing cost is reduced, the precision of the cage is easily enhanced, and the variation in precision can be minimized.

Furthermore, the cage may be a large one for use in a large conical roller bearing. Even in such a case, there is no need to prepare a large mold or pressing machine for a bottom-enlarging process and a swaging process. This further reduces the manufacturing cost.

Furthermore, the window length does not change by the bottom-enlarging process, so that a gap in the axial direction between a pocket hole and the roller can be filled to provide an appropriate gap.

It is preferable that the center guide portions of the columns adjacent to each other are positioned at an interval larger than a diameter of a part of the roller to be inserted in the interval, the part of the roller corresponding to a position of the interval between the center guide portions in an axial direction.

With this configuration, the interval between the center guide portions of adjacent columns is larger than the diameter of a part of the roller. The part corresponds to a position of the interval between the center guide portions in the axial direction. Accordingly, insertion resistance never increases by the center guide portions when the roller is inserted from the radially outside of the pocket hole.

Thus, even if the cage is a large one for use in a large bearing, the rollers can be easily inserted in the pocket holes from the radially outside thereof.

It is further preferable that the center guide portion of the column has one of:
a shear plane serving as a contact surface contacting a side surface of the roller, the shear plane being generated when the pocket hole is formed by punching, and
a surface contacting the side surface of the roller, the surface being prepared by pressing the shear plane.

With this configuration, the contact surface, which comes into contact with the side surface of the roller, of the center guide portions of the columns is a shear plane that is a smooth surface, or a pressed surface formed by pressing so that edge portions of the shear plane do not come into contact with the side surface. Therefore, the stability of the rollers can be improved.

### ADVANTAGEOUS EFFECTS OF THE INVENTION

As mentioned above, in the bearing cage according to the present invention, main effects as mentioned below can be obtained.
(1) The roller is inserted from the radially outside of the pocket hole with being inclined to avoid the retaining projections which are diagonally positioned, so as to be easily attached to the inner ring. This improves the assembly-work efficiency of the roller bearing.
(2) If the outer ring is removed even with the rollers being attached to the inner ring, the rollers can be removed by being inclined to avoid the diagonally-positioned retaining projections. Therefore, the roller bearing can be easily decomposed and maintained.
(3) The columns are positioned in the radially outside of the pitch circle diameter of the rollers, so that each of the columns does not reduce its width. Therefore, there is no problem in terms of strength and moldability.
(4) The column has a stepped shape including the center guide portion and a pair of the end portions, so that the contact dimension with the roller is smaller than that of a cage having a regular shape. Accordingly, lubricant oil easily passes through to increase the lubricity. Therefore, the torque can be reduced.
(5) Regarding the conical roller bearing cage, the bottom-enlarging process and swaging process are not needed, and thus no further time is not needed for adjustment. Therefore, the manufacturing cost can be reduced, the precision of the cage is easily enhanced, and the variation in precision can be minimized.
(6) Even if the cage is a large one for use in a large conical roller bearing, there is no need to prepare a large mold or a pressing machine for the bottom-enlarging process and the swaging process. This further reduces the manufacturing cost.
(7) Regarding the conical roller bearing cage, the window length is not changed by the bottom-enlarging process, so that a gap between the pocket hole and the roller in the axial direction can be filled to provide an appropriate gap.

### BRIEF DESCRIPTION OF THE DRAWINGS

FIG. 1 is a perspective view of a roller bearing cage according to a first embodiment of the present invention, and shows a conical roller bearing cage.
FIG. 2 is a perspective view showing a state where conical rollers are held by the cage to be attached to an inner ring.
FIG. 3 is a perspective view showing a state where three conical rollers are attached to the inner ring.
FIG. 4 is a perspective view showing the cage and the conical rollers only, by omitting the inner ring from the state shown in FIG. 3.
FIG. 5 is a front view of a vertical cross section of an enlarged main part for showing a method of attaching the conical roller to the inner ring.
FIG. 6 is a front view of a vertical cross section of an enlarged main part for showing a state where a set of the inner ring, the conical roller, and the cage, as shown in FIG. 2, is attached to an outer ring.
FIG. 7A is a front view of an enlarged main part for showing a midway stage of insertion of a conical roller in a pocket hole of the cage with inclining the conical roller.
FIG. 7B is a front view of an enlarged part for showing a completed stage of the insertion of the conical roller in the pocket hole of the cage.
FIG. 8 is a schematic view of the pocket hole viewed in a direction along which the conical roller is inserted, and shows specifications around the pocket hole.
FIG. 9 is a stress contour map of the cage for showing a result of insertion analysis.
FIG. 10 is a perspective view showing a state where one of the conical rollers is removed from the state shown in FIG. 2.
FIG. 11 is a perspective view of an enlarged part for showing a relationship between the cage and the conical roller.
FIG. 12 is a front view of the enlarged part of FIG. 11.
FIG. 13 is a front view of a vertical cross section of the enlarged part of FIG. 11.
FIG. 14A is a plan view of a horizontal cross section of an enlarged main part for showing a column cut at the position of a retention projection in a large-diameter side end portion.
FIG. 14B is a plan view of a horizontal cross section of an enlarged main part for showing the column cut at a center guide portion.
FIG. 15A shows a horizontally-cut end surface of an enlarged main part of the center guide portion of the column for showing a case where a shear plane generated at formation of the pocket holes by a punching process serves as a contact surface that is in contact with a side surface of the conical roller.
FIG. 15B is an enlarged view in which a main part of FIG. 15A is further enlarged.
FIG. 16A shows a horizontally-cut end surface of an enlarged main part of the center guide portion of the column for showing a case where a shear plane generated at punching the pocket holes is subjected to a press process to serve as the contact surface contacting the side surface of the conical roller.
FIG. 16B is an enlarged view in which the case of FIG. 16A is further enlarged.
FIG. 17 is a perspective view of a roller bearing cage according to a second embodiment of the present invention, and shows a cylindrical roller bearing cage.
FIG. 18 is a perspective view showing the cage and four conical rollers only, with omitting an inner ring from a state where the four conical rollers are attached to the inner ring.
FIG. 19 is a front view of a vertical cross section of an enlarged main part, for showing a method of attaching a cylindrical roller to the inner ring.
FIG. 20 is a front view of a vertical cross section of an enlarged main part for showing a state where an outer ring is attached to a set of the cage, the inner ring, and the cylindrical roller attached to the inner ring as shown in FIG. 19.
FIG. 21A is a front view of an enlarged main part, for showing a midway stage of insertion of a cylindrical roller in a pocket hole of the cage with inclining the cylindrical roller.
FIG. 21B is a front view of an enlarged main part, for showing a completed stage of the insertion of the cylindrical roller in the pocket hole of the cage.
FIG. 22 is a schematic view of the pocket hole viewed in the direction along which the cylindrical roller is inserted, and shows specifications around the pocket hole.

### DESCRIPTION OF EMBODIMENTS

Embodiments of the present invention are described in detail with reference to the accompanying drawings.

In the following embodiments, the axial direction, the radial direction, and the circumferential direction of the roller bearing respectively refer to an "axial direction", a "radial direction" and a "circumferential direction".

### [First Embodiment]

### <Conical roller bearing>

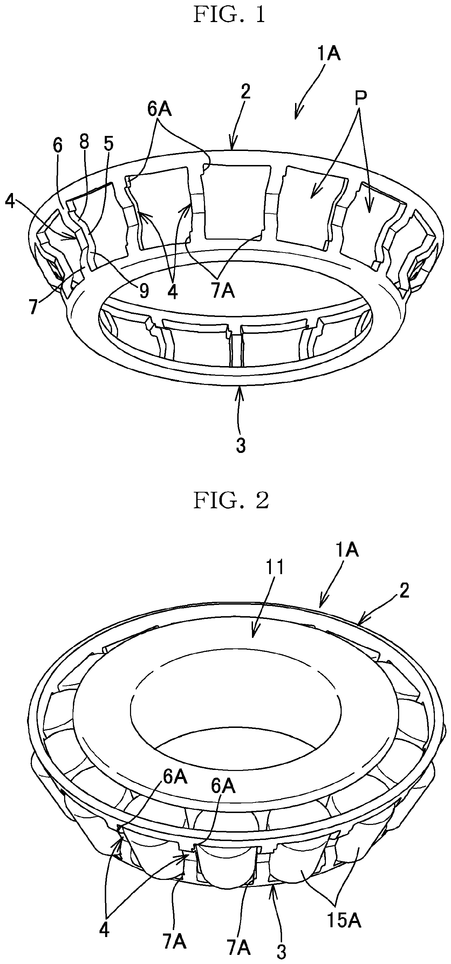

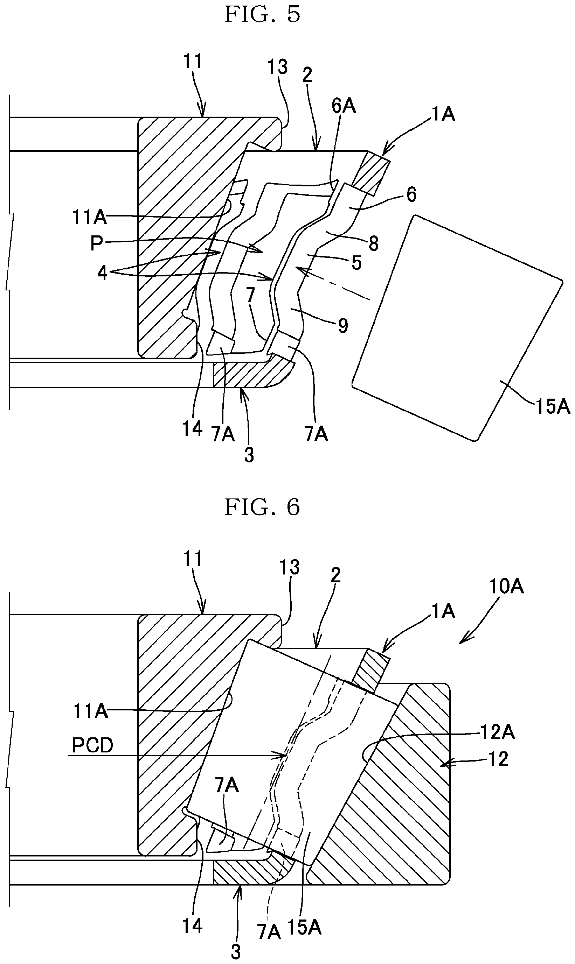

The roller bearing cage according to the first embodiment of the present invention, which is shown in the perspective view of FIG. 1, is a conical roller bearing cage 1A. The conical roller bearing cage 1A is used for a conical roller bearing 10A shown in the front view of the vertical cross section of the enlarged main part in FIG. 6.

The conical roller bearing 10A includes an inner ring 11, an outer ring 12, and a plurality of conical rollers 15A which are rolling elements.

The inner ring 11 has a cone-shaped outer raceway surface 11A, a large flange 13 in the large-diameter side end portion, and a small flange 14 in the small-diameter side end portion.

The outer ring 12 has a cone-shaped inner raceway surface 12A.

The conical rollers 15A roll between the cone-shaped outer raceway surface 11A and the cone-shaped inner raceway surface 12A.

### <Conical roller bearing cage>

In the conical roller bearing cage 1A, as shown in the perspective views of FIGS. 1 and 2, a large-diameter ring 2 and a small-diameter ring 3 that are paired and separated in the axial direction are connected by a plurality of columns 4, and a plurality of pocket holes P each of which houses the conical roller 15A are provided at equal intervals in the circumferential direction.

As shown in the perspective view of FIG. 1 and the front view of the vertical cross section of the enlarged main part in FIG. 5, the column 4, which is provided between the pocket holes P adjacent to each other, includes a center guide portion 5 and a pair of end portions which are a large-diameter side end portion 6 and a small-diameter side end portion 7 and are respectively connected to the rings 2 and 3.

The center guide portion 5 is positioned at the center of the column 4 in the axial direction to guide the conical roller 15A.

The large-diameter side end portion 6 is connected to an upper part of the center guide portion 5 through an inclined portion 8 and is connected to the large-diameter ring 2 in the radially outside of the center guide portion 5.

The small-diameter side end portion 7 is connected to a lower part of the center guide portion 5 through an inclined portion 9 and is connected to the small-diameter ring 3 in the radially outside of the center guide portion 5.

The large-diameter side end portion 6 and the small-diameter side end portion 7, of the column 4, respectively have one retaining projection 6A and one retaining projection 7A which are diagonally positioned in a single pocket hole P.

The pocket hole P has a shape that allows the conical roller 15A to be inserted therein with the conical roller 15A being inclined so as to avoid a pair of the diagonally-positioned retaining projections 6A and 7A when the conical roller 15A is inserted from the radially outside of the pocket hole P to be attached to the inner ring 11, as described later.

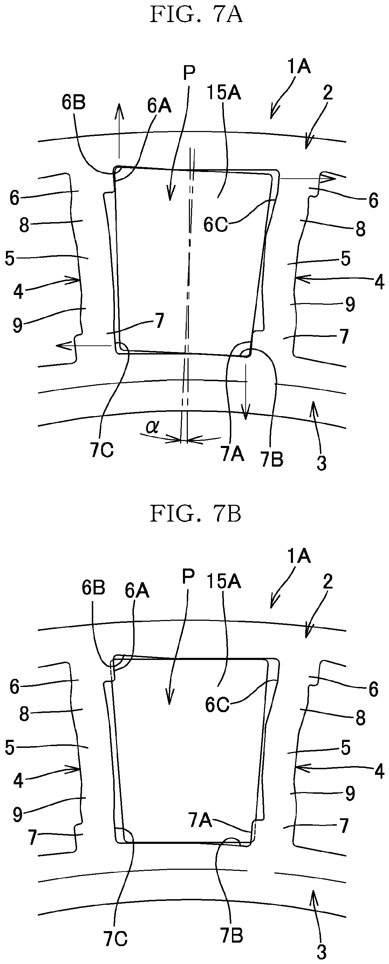

In other words, as shown in the front views of the enlarged main part in FIGS. 7A and 7B, the pocket hole P has axial-direction relief portions 6B, 7B which are diagonally located so as to respectively correspond to the retaining projections 6A, 7A, and circumferential-direction relief portions 6C, 7C which are diagonally located so as to correspond to portions at which no retaining projections 6A, 7A are provided, for example.

As shown in the front view of the vertical cross section of the enlarged main part in FIG. 5, the conical roller 15A is inserted from the radially outside of the pocket hole P to be attached to the inner ring 11. At this time, as in a midway stage of the insertion as shown in the front view of the enlarged main part in FIG. 7A, the conical roller 15A is inclined to avoid a pair of the retaining projections 6A and 7A which are diagonally positioned (see an angle α that indicates the inclination around the normal line for allowing the conical roller 15A to be inserted, when the pocket hole P is viewed from the front), and inserted in the pocket hole P.

In the state where the insertion of the conical roller 15A into the pocket hole P is completed, as shown in the front view of the vertical cross section of the enlarged main part in FIG. 7B (the conical roller 15A is attached to the inner ring 11, as shown in the front view of the vertical cross section of the enlarged main part in FIG. 6), the side surface of the conical roller 15A is in contact with the cone-shaped outer raceway surface 11A of the inner ring 11, so that the inclination of the conical roller 15A inserted with being inclined to avoid the retaining projections 6A and 7A is corrected. Thus, the conical roller 15A is retained by the retaining projections 6A and 7A.

Here, the retaining projections 6A and 7A also have a function of controlling the movement of the cage 1A in the radial direction.

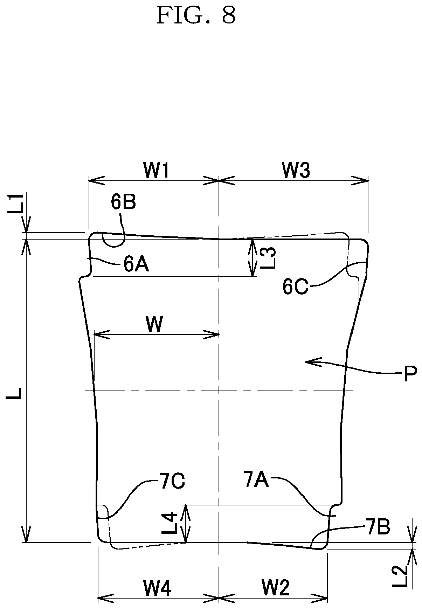

The sizes around the pocket hole P are described using the specifications shown in the schematic view of the pocket hole, as shown in FIG. 8, viewed in the direction along which the conical roller is inserted. Regarding the size of the conical roller 15A, the length, the large-diameter side radius, and the small-diameter side radius are respectively indicated by RL, R1, and R2.
(1) A window height L is slightly greater than the length RL of the conical roller 15A, and is set pursuant to the required specifications.
(2) A window width of the roller guide portion is set to be larger by 0.5 to 3.5 % than the radius of the corresponding conical roller 15A. For example, the window width W at the center of the pocket hole P in the height direction is set, for example, to be larger by 0.5 to 3.5% than (R1 + R2)/2.
(3) The relief amounts L1 and L2 in the axial direction are set to be 1 to 5% of the length RL of the conical roller 15A, in view of the relationship with a groove length of the inner ring 11.
(4) A length L3 of the roller retaining portion in the large-diameter side and a length L4 of the roller retaining portion in the small-diameter side are set to be 5% or more of the length RL of the conical roller 15A for preventing the conical roller 15A from falling off.
(5) The window width of the roller retaining portion in the large-diameter side is set to be smaller by 2 to 10% than the corresponding radius of the conical roller 15A. For example, the window width W1 of the pocket hole P at the position corresponding to the upper end of the window height L is set to be smaller by 2 to 10% than the radius R1 of the conical roller 15A in the large-diameter side.
(6) The window width of the roller retaining portion in the small-diameter side is set to be smaller by 2 to 10% than the corresponding radius of the conical roller 15A. For example, the window width W2 of the pocket hole P, in the position corresponding to the lower end of the window height L is set to be smaller by 2 to 10% than the radius R2 in the small-diameter side of the conical roller 15A.
(7) The window width W3 of the roller non-retaining portion in the large-diameter side is set not to have an interference relative to the retaining projection 6A during the step of inserting the conical roller 15A into the pocket hole P.
(8) The window width W4 of the roller non-retaining portion in the small-diameter side is set to refrain from having an interference relative to the retaining projection 7A during the step of inserting the conical roller 15A into the pocket hole P.

As mentioned above, the sizes around the pocket hole P of the conical roller bearing cage 1A are set, so that the strength of the conical roller bearing cage 1A can be ensured, the inclination of the conical roller 15A can be minimized, and the stress applied to the conical roller bearing cage 1A during the insertion can be equal to or less than the yield stress.

### <Insertion analysis>

An insertion analysis is described which was carried out for verifying that the conical roller can be inserted into the pocket hole of the conical roller bearing cage with a stress equal to or less than the yield stress of the cage.

### <Shape model>

(1) A conical roller bearing cage is modeled with three-dimensional (3D) elements.
(2) A conical roller is defined as a rigid body.
(3) Sizes of the conical roller are set such that the length, the radius in the large-diameter side, and the radius in the small-diameter side are respectively indicated by RL, R1, and R2.
(4) Sizes of the pocket hole (specifications in FIG. 8) are set such that:
   - the window height L = RL × 1.02;
   - the window width of the roller guide portion is larger by 0.9 % than the radius of a part of the conical roller. The part of the conical roller corresponds to a position of the
   window width of the roller guide portion in the axial direction. For example, the window width W at the center of the pocket hole P in the height direction satisfies W = (R1 + R2)/2 × (1 + 0.009);
   - the axial-direction relief amount L1, L2 = RL × 0.025;
   - the length L3 of the roller retaining portion in the large-diameter side satisfies L3 = RL × 0.125;
   - the length L4 of the roller retaining portion in the small-diameter side satisfies L4 = RL × 0.125;
   - the window width W1 of the roller retaining portion in the large-diameter side satisfies W1 = R1 × (1 - 0.04);
   - the window width W2 of the roller retaining portion in the small-diameter side satisfies W2 = R2 × (1 - 0.04);
   - the window width W3 of the roller non-retaining portion in the large-diameter side satisfies W3 = cos (α) × (2 × R1) - W1;
   - the window width W4 of the roller non-retaining portion in the small-diameter side satisfies W4 = cos (α) × (2 × R2) - W2;

Here, "α" indicates an inclined angle of the conical roller around the normal line during the insertion into the pocket hole, when the pocket hole P is viewed from the front (see FIG. 7A). The angle allows the conical roller to be inserted in the pocket hole.

An angle in the large-diameter side, which is indicated by atan (L1 / W1) and an angle in the small-diameter side, which is indicated by atan (L2 / W2), are compared, and the smaller one is defined as "α".

### <Material model>

A steel plate cold commercial (SPCC) material was used and the plastic region thereof was also taken into account.

### <Conditions>

(1) The modelling was carried out based on one-by-one insertion of the conical roller.
(2) The start position of the analysis of the conical roller (before insertion) is such that the conical roller is moved so as not to interfere with the cage, toward the radially outside along the normal line defined by viewing the pocket hole having the conical roller inserted therein (state where the conical roller bearing is completed).
(3) The conical roller was moved from the pre-insertion state toward the pocket hole along the normal line so as to be inserted in the pocket hole.
(4) At this time, the conical roller is rotatable with respect to the normal line (i.e., the conical roller can be inserted in the pocket hole with being inclined).

### <Result>

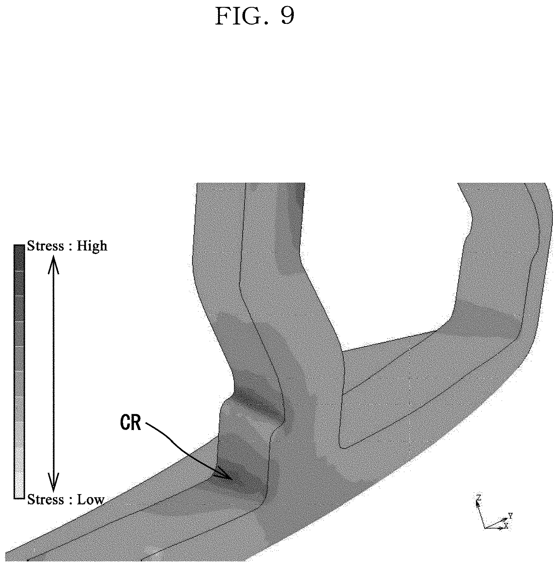

As shown in the stress contour map of FIG. 9, the maximum stress generated in the cage when the conical roller is inserted in the pocket hole of the conical roller bearing cage is generated at a corner R portion CR, and its value is about 50% of the yield stress, which is within the elasticity of the roller bearing cage.

### <Insertion test using test cage>

A conical roller bearing cage was manufactured for a test to have sizes same as those for the conical roller bearing cage manufactured for the insertion analysis, and a conical roller was actually inserted in the pocket hole from the radially outside thereof to be attached to the inner ring of the conical roller bearing.

As a result, the conical roller bearing cage was not plastically deformed like the cage for the insertion analysis.

### <Attachment of conical rollers to inner ring>

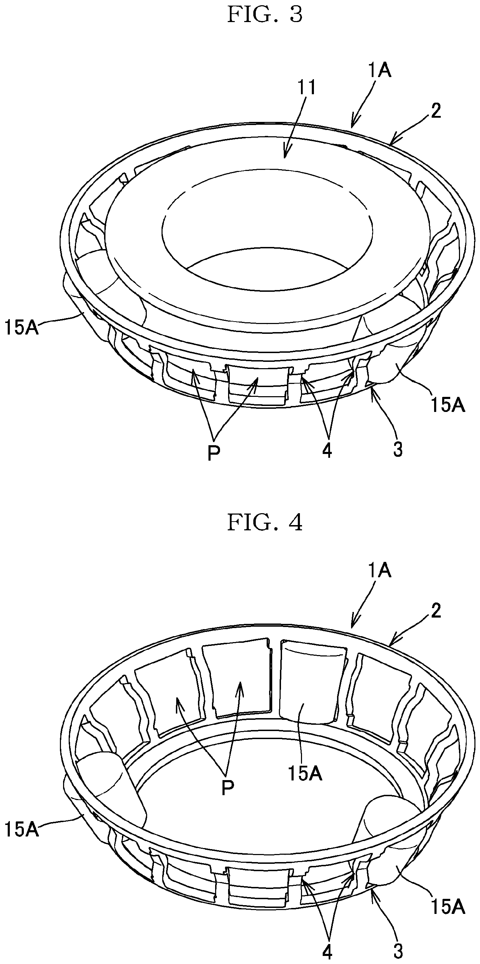

When the conical rollers 15A are attached to the inner ring 11 as shown in the perspective view of FIG. 2, the conical rollers 15A are inserted in appropriate positions apart in the circumferential direction, e.g., three conical rollers 15A which are equally apart from one another in the circumferential direction are respectively inserted in three pocket holes P of the cage 1A from the radially outside of pocket holes P. Thus, the conical rollers 15A are attached to the inner ring 11, as shown in the perspective view of FIG. 3 and the perspective view of FIG. 4 illustrating only the cage 1A and the conical rollers 15A with omitting the inner ring 11 from FIG. 3. Accordingly, the position of the cage 1A can be defined with respect to the inner ring 11.

In this state, conical rollers 15A are individually inserted in the pocket holes P between two of the three conical rollers 15A shown in FIG. 3 from the radially outside of the pocket holes P, whereby all the conical rollers 15A can be attached to the inner ring 11 as shown in FIG. 2.

In the configuration of the conical roller bearing cage 1A as mentioned above, the conical rollers 15A can be inserted from the radially outside of the pocket holes P with being inclined to avoid the retaining projections 6A and 7A which are diagonally positioned, and can be easily attached to the inner ring 11. This eliminates the necessity of a bottom-enlarging process or a swaging process.

As mentioned above, the bottom-enlarging process and swaging process are not needed, so that no further time is needed for adjustment. Therefore, the manufacturing cost is reduced, the precision of the cage 1A can be easily enhanced, and the variation in precision can be minimized.

Even if the cage 1A has a large size for use in a particularly large conical roller bearing, there is no need to prepare a large mold or a pressing machine for the bottom-enlarging process and the swaging process. This further reduces the manufacturing cost.

Furthermore, there is no variation in window length caused by the bottom-enlarging, so that gaps in the pocket holes P in the axial direction can be filled to allow the pocket holes P to have appropriate gaps.

The center guide portion 5, the large-diameter side end portion 6, and the small-diameter side end portion 7, all of which constitute the column 4, are positioned in the radially outside of a pitch circle diameter PCD of the conical rollers 15A (the pitch circle diameter PCD is not crossed). The center guide portions 5 are positioned in the radially outside of the pitch circle diameter PCD of the conical rollers 15A, so that a space between the conical rollers 15A at the center guide portions 5 is wider than a space between the conical rollers 15A on the pitch circle diameter PCD.

Accordingly, a relatively wide width of the column 4 (the length in the circumferential direction) can be ensured, and thus the column 4 is prevented from having a narrow width. Therefore, there is no problem in terms of the strength and the moldability.

In addition, the column 4 is formed of the center guide portion 5, and the large-diameter side end portion 6 and the small-diameter side end portion 7 which are positioned radially outside of the center guide portion 5. Such a stepped shape of the column 4 reduces a contact dimension with the conical roller 15A in comparison with a cage having a regular shape.

This allows lubricant oil to pass through, thereby increasing the lubricity. Accordingly, the torque can be reduced.

Even in the state where the conical rollers 15A are attached to the inner ring 11, the conical rollers 15A can be removed with being inclined to avoid the diagonally-located retaining projections 6A and 7A, by removing the outer ring 12. This configuration facilitates decomposition and maintenance of the conical roller bearing 10A.

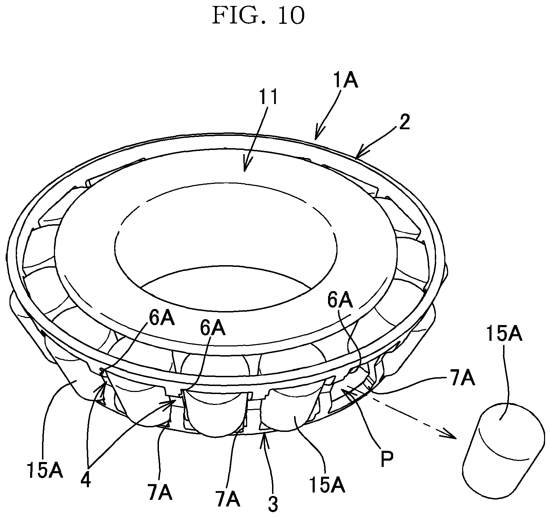

For example, in the state (shown in the perspective view of FIG. 10) where one conical roller 15A is removed from the state shown in FIG. 2, the raceway surface 11A (see FIG. 5) of the inner ring 11 can be visually checked from the pocket hole P from which the conical roller 15A is removed.

### <Relationship between cage shape and conical roller>

The relationship between the shape of the conical roller bearing cage 1A and the conical roller 15A is described.

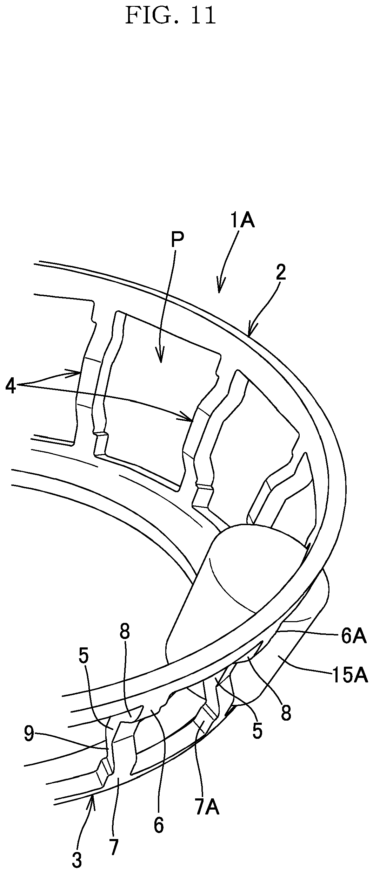

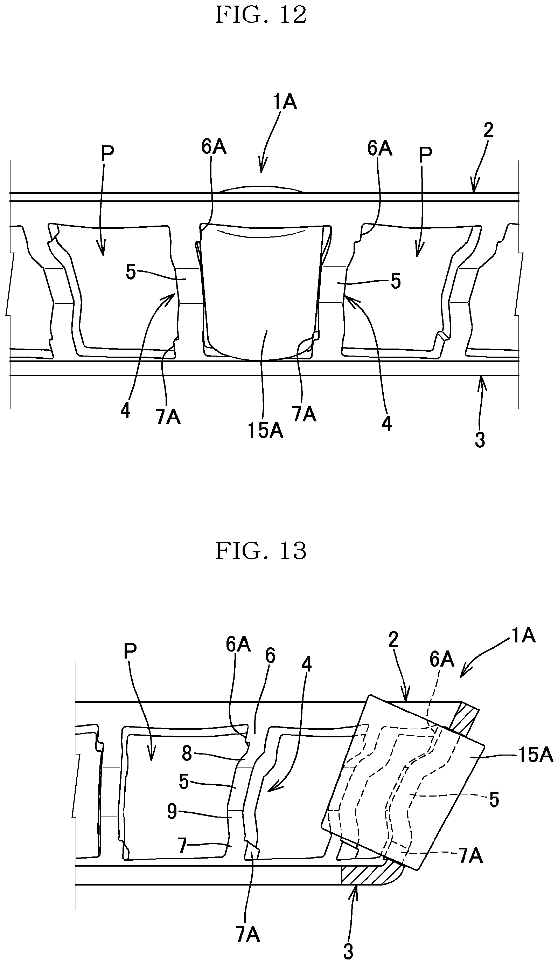

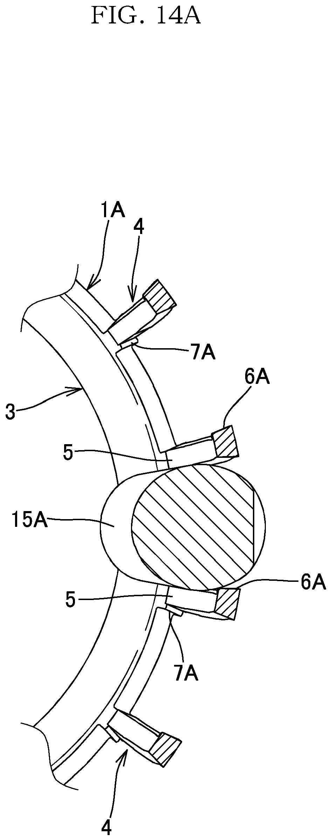

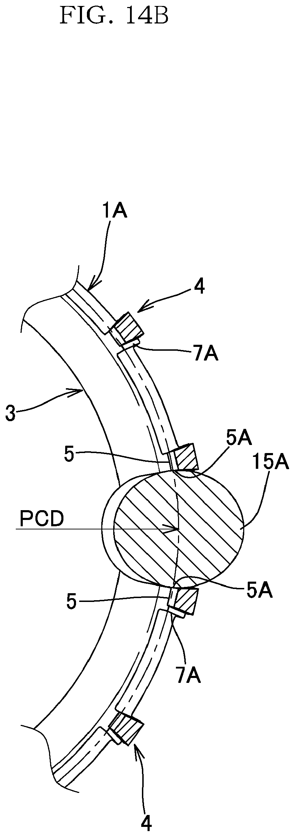

The conical roller 15A is inserted in the pocket hole P from the radially outside of the pocket P of the cage 1 so as to be attached to the inner ring 11, as shown in FIGS. 5, 7A, and 7B, and then the inner ring 11 is omitted from being illustrated. Thus prepared configuration is shown in the perspective view of the enlarged main part in FIG. 11, the front view of the enlarged main part in FIG. 12, the front view of the vertical cross section of the enlarged main part in FIG. 13, and the plan view of the horizontal cross section of the enlarged main part in FIGS. 14A and 14B.

As shown in FIGS. 12, 14A, and 14B, the interval between the center guide portions 5 of the columns 4 adjacent to each other is set to be within the specified range of the space between the conical rollers 15A in the circumferential direction. Specifically, the interval between the center guide portions 5 is set to be larger by 0.5 to 3.5 % than the corresponding diameter of the conical roller 15A, as mentioned above.

Accordingly, the center guide portions 5 do not have a function of retaining the conical rollers 15A, but set the space between the conical rollers 15A in the circumferential direction by the interval between the center guide portions 5, so as to guide the conical rollers 15A.

Furthermore, the interval between the center guide portions 5 of the adjacent columns 4 is larger than the corresponding diameter of the conical roller 15A. Accordingly, insertion resistance never increases by the center guide portions 5 when the conical roller 15A is inserted from the radially outside of the pocket hole P.

Accordingly, even if the cage 1A is to be used for a particularly large conical roller bearing, the conical rollers 15A can be easily inserted in the pocket holes P from the radially outside thereof.

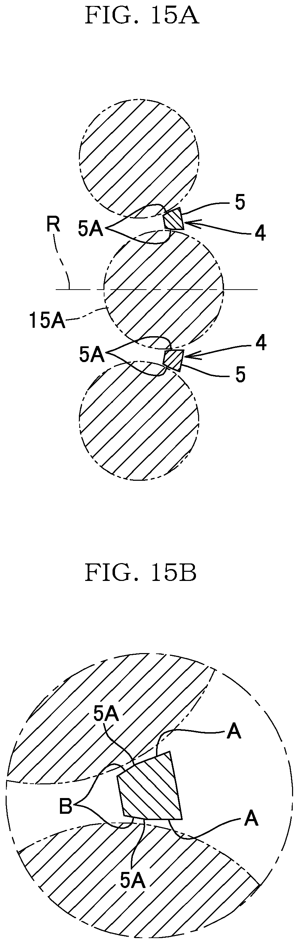

If the pocket holes P are formed by penetrating the cage from the radially inside thereof by a punching process, fracture surfaces A and shear planes B that are smooth surfaces are generated as shown in the plan view of the horizontal cross section of the enlarged main part in FIG. 14B, the end surface view of the horizontal cross section of the enlarged main part in FIG. 15A, and the enlarged view of FIG. 15B. The shear planes B serve as contact surfaces 5A. In this case, the contact surfaces 5A opposite to each other inside a single pocket hole are parallel to each other, and are also parallel to the radial direction R passing through the center of the conical roller 15A.

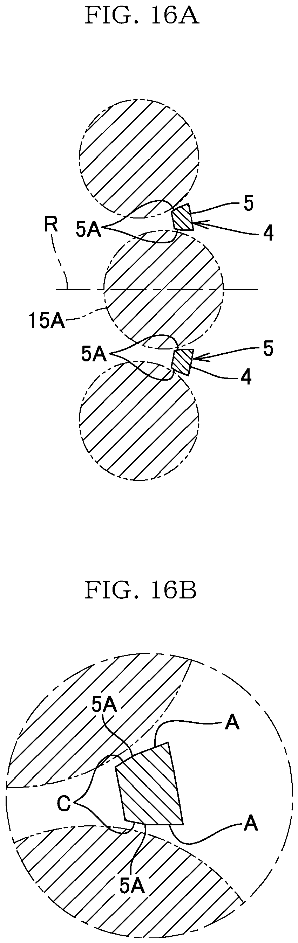

The center guide portions 5 may be formed in a further radially outside, as shown in the end surface view of the horizontal cut section of the enlarged main part of FIG. 16A, and the enlarged view of FIG. 16B. In such a case, edge portions of columns 4 come into contact with side surfaces of the conical rollers 15A only via the shear planes B shown in FIG. 15B, causing the side surfaces to be damaged. In view of the above, the center guide portions 5 of the columns 4 are pressed through a pressing process after the pocket holes are formed by the penetration by the punching process, to thereby form pressed surfaces C which are to serve as the contact surfaces 5A, as shown in FIG. 16B. In this case, the contact surfaces 5A opposite to each other in a single pocket hole are inclined toward the radial direction R that passes through the center of the conical roller 15A, as approaching the radially outside.

As shown in FIGS. 15A, 15B, 16A, and 16B, the contact surfaces 5A in the center guide portions 5 of the columns 4 adjacent to each other are the shear planes B which are smooth surfaces, or the pressed surfaces C formed by pressing the shear planes B so that the edge portions of the shear planes B are prevented from coming into contact with the side surfaces of conical rollers 15A. This improves the stability of the conical rollers 15A.

As shown in FIG. 13, the bottom surface of the large-diameter ring 2 and the top surface of the small-diameter ring 3 are parallel to the opposite end surfaces of the conical roller 15A.

As shown in FIGS. 6 and 14B, the center guide portions 5 of the columns 4 are positioned in the radially outside of the pitch circle diameter PCD of the conical rollers 15A.

Accordingly, as shown in FIG. 11, the large-diameter side end portion 6 and the small-diameter side end portion 7 of the column 4 are positioned in the further radially outside of the center guide portion 5 located at the position mentioned above.

The column 4 includes the center guide portion 5, and the large-diameter side end portion 6 and the small-diameter side end portion 7, which are positioned radially outside of the center guide portion 5. The center guide portion 5 is positioned at the center of the column 4 in the axial direction, and in the radially outside of the pitch circle diameter PCD of the conical rollers 15A in the conical roller bearing cage 1A, so as to guide the conical rollers 15A. In view of such a shape and the position of the column 4, it is easy to set the shape of the cage 1A so that the direction along which the pocket hole P is formed with using a punch or a die is perpendicular to the side surface of the cup-shaped cage 1A. As a result, as shown in FIG. 13, the bottom surface of the large-diameter ring 2 and the top surface of the small-diameter ring 3 are parallel to the end surfaces of the conical roller 15A.

Therefore, the pocket holes P can be easily formed through the punching process by setting the shape of the cage 1 as mentioned above, thereby reducing the manufacturing cost.

### [Second embodiment]

### <Cylindrical roller bearing>

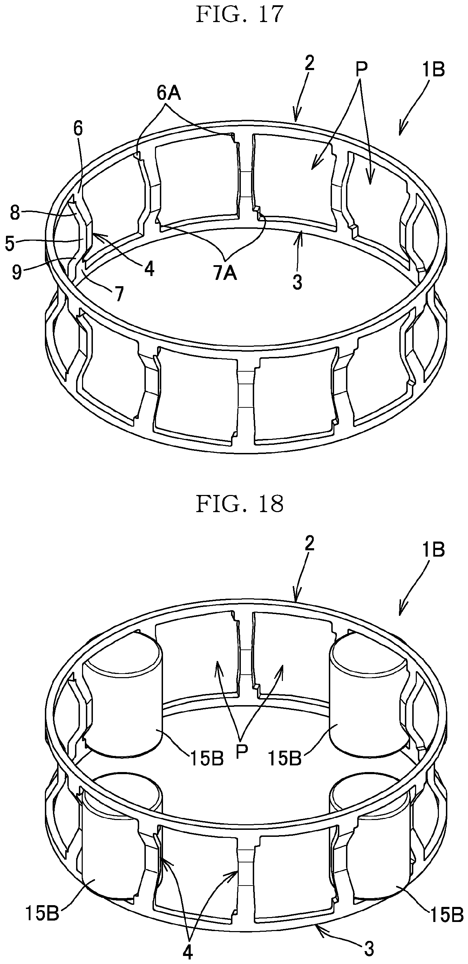

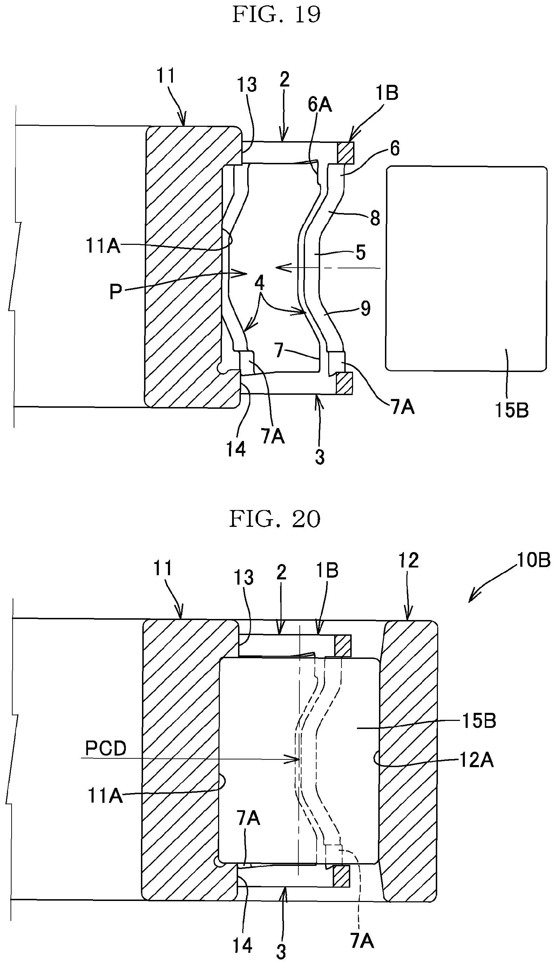

The roller bearing cage according to a second embodiment of the present invention, which is shown in the perspective view of FIG. 17, is a cylindrical roller bearing cage 1B. The cylindrical roller bearing cage 1B is used for a cylindrical roller bearing 10B shown in the front view of the vertical cross section of the enlarged main part shown in FIG. 20.

The cylindrical roller bearing 10B includes an inner ring 11, an outer ring 12, and a plurality of cylindrical rollers 15B which are rolling elements.

The inner ring 11 has a cylinder-shaped outer raceway surface 11A and flanges 13, 14 in its respective end portions in the axial direction.

The outer ring 12 has a cylinder-shaped inner raceway surface 12A.

The cylindrical rollers 15B roll between the cylinder-shaped outer raceway surface 11A and the cylinder-shaped inner raceway surface 12A.

### <Cylindrical roller bearing cage>

As shown in the perspective views of FIGS. 17 and 18, the cylindrical roller bearing cage 1B has a shape such that a pair of rings 2 and 3 that are apart from each other in the axial direction are connected by a plurality of columns 4, and a plurality of pocket holes P for housing cylindrical rollers 15B are provided at equal intervals in the circumferential direction.

As shown in the perspective view of FIG. 17 and the front view of the vertical cross section of the enlarged main part in FIG. 19, the column 4 positioned between the pocket holes P adjacent to each other includes a center guide portion 5 and paired end portions 6 and 7 respectively connected to the rings 2 and 3.

The center guide portion 5 is positioned at the center of the column 4 in the axial direction to guide the cylindrical roller 15B.

The end portion 6 is connected to an upper part of the center guide portion 5 through an inclined portion 8 and is connected to the ring 2 in the radially outside of the center guide portion 5.

The end portion 7 is connected to a lower part of the center guide portion 5 through an inclined portion 9 and is connected to the ring 3 in the radially outside of the center guide portion 5.

In the end portions 6 and 7 of the column 4, retaining projections 6A and 7A are individually provided at diagonal positions in a single pocket hole P.

The pocket hole P has a shape, as described later, such that the conical roller 15B can be inserted with being inclined to avoid a pair of the diagonally-positioned retaining projections 6A and 7A upon insertion from the radially outside of the pocket hole P so as to be attached to the inner ring 11.

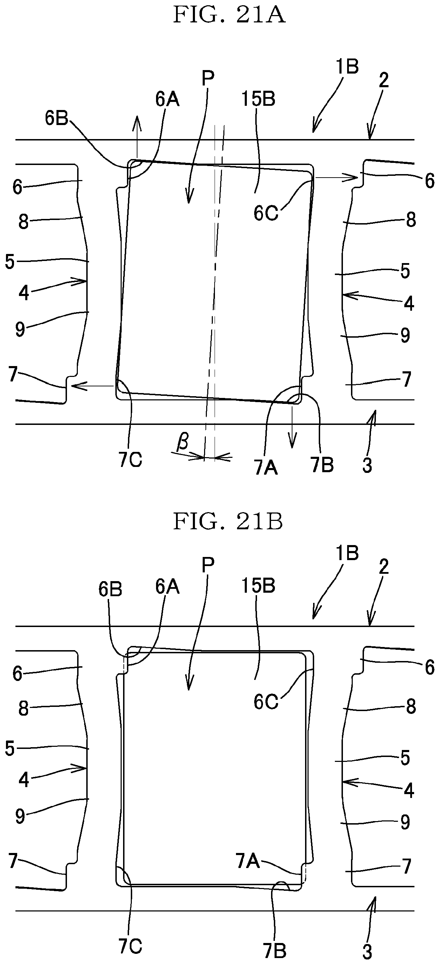

In other words, as shown in the front views of the enlarged main parts in FIGS. 21A and 21B, the pocket hole P has axial-direction relief portions 6B, 7B which are diagonally located so as to correspond to the positions of the retaining projections 6A, 7A, and circumferential-direction relief portions 6C, 7C which are diagonally located so as to correspond to portions at which no retaining projections 6A, 7A are provided, for example.

As shown in the front view of the vertical cross section of the enlarged main part in FIG. 19, the cylindrical roller 15B is inserted from the radially outside of the pocket hole P to be attached to the inner ring 11. At this time, as shown in the insertion stage illustrated in the front view of the enlarged a main part in FIG. 21A, the cylindrical roller 15B can be inclined to avoid a pair of the retaining projections 6A and 7A which are diagonally positioned (see an angle β that indicates the inclination around the normal line for allowing the cylindrical roller 15B to be inserted, when the pocket hole P is viewed from the front), and inserted in the pocket hole P.

In the state where the insertion of the cylindrical roller 15B into the pocket holes P is completed, as shown in the front view of the vertical cross section of the enlarged main part in FIG. 21B (the cylindrical roller 15B is attached to the inner ring 11, as shown in the front view of the vertical cross section of the enlarged main part in FIG. 20), the side surface of the cylindrical roller 15B is in contact with the cylinder-shaped outer raceway surface 11A of the inner ring 11, so that the inclination of the cylindrical roller 15B inserted with being inclined to avoid the retaining projections 6A and 7A is corrected. Thus, the cylindrical rollers 15B are retained by the retaining projections 6A and 7A.

Here, the retaining projections 6A and 7A also have a function of controlling the movement of the cage 1B in the radial direction.

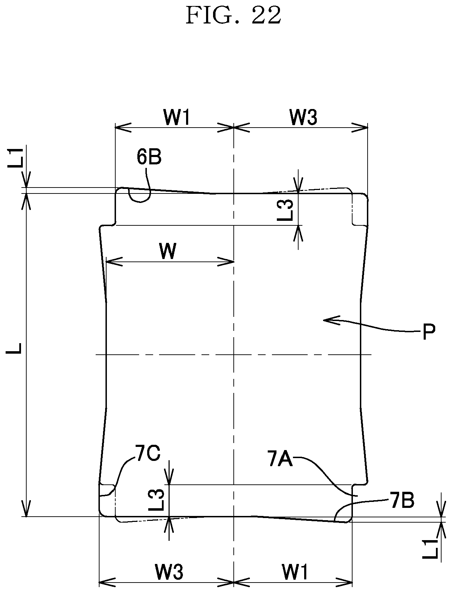

Then, sizes around the pocket hole P are described using the specifications shown in the schematic view of the pocket hole viewed in the direction along which the cylindrical roller is inserted, as shown in FIG. 22. Regarding the sizes of the cylindrical roller 15B, the length and the radius are respectively indicated by RL and R1.
(1) A window height L is slightly greater than the length RL of the cylindrical roller 15B, and is set pursuant to the required specifications.
(2) A window width of the roller guide portion is set to be larger by 0.5 to 3.5% than the corresponding radius of the cylindrical roller 15B. For example, the window width W at the center of the pocket hole P in the height direction is set, for example, to be larger by 0.5 to 3.5% than R1.
(3) The relief amount L1 in the axial direction is set to be 1 to 5% of the length RL of the cylindrical roller 15B, in view of the relationship with a groove length of the inner ring 11.
(4) A length L3 of the roller retaining portion is set to be 5% or more of the length RL of the cylindrical roller 15B for preventing the cylindrical roller 15B from falling off.
(5) A window width W1 of the roller retaining portion is set to be shorter by 2 to 10% than the radius R1 of the cylindrical roller 15B.
(6) A window width W3 of the roller non-retaining portion is set not to have an interference relative to the retaining projections 6A and 7A during the step of inserting the cylindrical roller 15B into the pocket hole P.

As mentioned above, the sizes around the pocket hole P of the cylindrical roller bearing cage 1B are set, so that the strength of the cylindrical roller bearing cage 1B can be ensured, the inclination of the cylindrical roller 15B can be minimized, and the stress applied to the cylindrical roller bearing cage during the insertion of the cylindrical roller 15B can be equal to or less than the yield stress.

In the configuration of the cylindrical roller bearing cage 1B as mentioned above, the cylindrical roller 15B can be inserted from the radially outside of the pocket hole P with being inclined to avoid the retaining projections 6A and 7A which are diagonally positioned, so as to be easily attached to the inner ring 11. This improves the assembly work efficiency of the cylindrical roller bearing 10B.

Even in the state where the cylindrical rollers 15B are attached to the inner ring 11, the cylindrical rollers 15B can be removed with being inclined to avoid the diagonally-located retaining projections 6A and 7A, by removing the outer ring 12. This configuration facilitates decomposition and maintenance of the cylindrical roller bearing 10B.

Furthermore, the center guide portion 5 and a pair of end portions 6 and 7, all of which form the column 4, are positioned in the radially outside of the pitch circle diameter PCD of the cylindrical rollers 15B, and thus the column 4 is not reduced in its thickness. Therefore, no problem may be raised in terms of the strength and moldability.

Furthermore, the column 4 is formed of the center guide portion 5 and a pair of the end portions 6 and 7 positioned radially outside of the center guide portion 5. With such a stepped shape of the column 4, a contact area of the columns 4 with the cylindrical rollers 15B is smaller than that in a cage having a regular shape.

This allows lubricant oil to pass through, thereby increasing the lubricity. Accordingly, the torque can be reduced.

In addition, the retaining projections 6A and 7A are provided at root parts of the respective columns 4. Accordingly, the precision in size of the retaining projections 6A and 7A is significantly increased, in comparison with roller retaining portions of Patent Literature 2, which are provided at the center of a column that underwent a step-forming process to have the central annular portion located radially outside of a pitch circle diameter. Accordingly, variation in intervals of the cylindrical rollers upon insertion is significantly minimized.

Accordingly, the variation in the diameter of a circle circumscribing the cylindrical rollers attached to the inner ring is reduced. Therefore, the outer ring can be easily attached to an intermediate assembly of a cylindrical roller bearing in which the inner ring, cylindrical rollers, and cage are integrated.

The above description of the embodiments are all examples, and thus the present invention is not limited thereto. Various improvements and modifications can be applied to the present invention as defined by the appended set of claims.

### DESCRIPTION OF THE REFERENCE CHARACTERS

- 1A: Conical roller bearing cage
- 1B: Cylindrical roller bearing cage
- 2: Large-diameter ring, or Ring
- 3: Small-diameter ring, or Ring
- 4: Column
- 5: Center guide portion
- 5A: Contact surface
- 6: Large-diameter side end portion, or End portion
- 6A: Retaining projection
- 6B: Axial-direction relief portion
- 6C: Circumferential-direction relief portion
- 7: Small-diameter side end portion, or End portion
- 7A: Retaining projection
- 7B: Axial-direction relief portion
- 7C: Circumferential-direction relief portion
- 8, 9: Inclined portion
- 10A: Conical roller bearing
- 10B: Cylindrical roller bearing
- 11: Inner ring
- 11A: Cone-shaped outer raceway surface, or Cylinder-shaped outer raceway surface
- 12: Outer ring
- 12A: Cone-shaped inner raceway surface, or Cylinder-shaped internal raceway surface
- 13: Large flange, of Flange
- 14: Small flange, or Flange
- 15A: Conical roller
- 15B: Cylindrical roller
- A: Fracture surface
- B: Shear plane
- C: Pressed surface
- CR: Corner R portion
- P: Pocket hole
- PCD: Pitch circle diameter
- R: Radial direction passing through center of conical roller

## Claims

1. A roller bearing cage for rotatably holding, at a predetermined interval, rollers (15A; 15B) serving as rolling elements of a roller bearing, the roller bearing cage being provided with a plurality of pocket holes (P) at equal intervals in a circumferential direction for housing the rollers (15A; 15B), wherein
a plurality of columns (4) connect a pair of rings (11, 12) that are apart from each other in an axial direction,
each of the columns (4), which is positioned between the pocket holes (P) adjacent to each other, includes:
a center guide portion (5) for guiding the rollers (15A; 15B), the center guide portion (5) being positioned at an axially center of the column (4) in a radially outside of a pitch circle diameter of the rollers (15A; 15B); and
a pair of end portions (6, 7) each of which is connected to the center guide portion (5) at one end and to a corresponding one of the rings (11, 12) at the other end in the radially outside of the center guide portion (5),
each of the end portions of the column (4) has a retaining projection (6A) so that the retaining projection (6A) is positioned, in each of the pocket holes (P), diagonally opposite to another retaining projection (7A),
**characterized in that**:
an axial-direction relief portion (6B) is provided, in each of the pocket holes (P), diagonally opposite to another axial-direction relief portion (7B) in a corner of the pocket hole (P) where the retaining projection is provided, and
a circumferential-direction relief portion (6C) is provided, in each of the pocket holes (P), diagonally opposite to another circumferential-direction relief portion (7C) in a corner of the pocket hole (P) where no retaining projection is provided.

2. The roller bearing cage according to claim 1, wherein
the center guide portions (5) of the columns (4) adjacent to each other are positioned at an interval larger than a diameter of a part of the roller (15A; 15B) to be inserted in the interval, the part of the roller (15A; 15B) corresponding to a position of the interval between the center guide portions (5) in an axial direction.

3. The roller bearing cage according to claim 1 or 2, wherein
the center guide portion (5) of the column (4) has one of:
a shear plane (B) serving as a contact surface (5A) contacting a side surface of the roller (15A; 15B), the shear plane (B) being generated when the pocket hole (P) is formed by punching, and
a surface contacting the side surface of the roller (15A; 15B), the surface being prepared by pressing the shear plane (B).

## Patentansprüche

1. Rollenlagerkäfig zum drehbaren Halten, mit einem vorbestimmten Zwischenraum, von Rollen (15A; 15B), die als Wälzkörper eines Rollenlagers dienen, wobei der Rollenlagerkäfig mit einer Vielzahl von Sacklöchern (P) mit gleichen Zwischenräumen in einer Umfangsrichtung zum Unterbringen der Rollen (15A; 15B) versehen ist, wobei
eine Vielzahl von Stützen (4) ein Paar von Ringen (11, 12) verbindet, die in einer axialen Richtung voneinander entfernt sind,
jede der Stützen (4), die zwischen den Sacklöchern (P) benachbart zueinander positioniert sind, folgendes enthält:
einen zentralen Führungsteilbereich (5) zum Führen der Rollen (15A; 15B), wobei der zentrale Führungsteilbereich (5) bei einer axialen Mitte der Stütze (4) bei einer radialen Außenseite eines Rollkreisdurchmessers der Rollen (15A; 15B) positioniert ist; und
ein Paar von Endteilbereichen (6, 7), von denen jeder mit dem zentralen Führungsteilbereich (5) an einem Ende und mit einem entsprechenden der Ringe (11, 12) am anderen Ende bei der radialen Außenseite des zentralen Führungsteilbereichs (5) verbunden ist,
jeder der Endteilbereiche der Stütze (4) einen Haltevorsprung (6A) hat, so dass der Haltevorsprung (6A) in jedem der Sacklöcher (P) diagonal gegenüberliegend zu einem weiteren Haltevorsprung (7A) positioniert ist,
**dadurch gekennzeichnet, dass**:
ein Entlastungsteilbereich in axialer Richtung (6B) in jedem der Sacklöcher (P) diagonal gegenüberliegend zu einem weiteren Entlastungsteilbereich in axialer Richtung (7B) in einer Ecke des Sacklochs (P) vorgesehen ist, wo der Haltevorsprung vorgesehen ist, und
ein Entlastungsteilbereich in Umfangsrichtung (6C) in jedem der Sacklöcher (P) diagonal gegenüberliegend zu einem weiteren Entlastungsteilbereich in Umfangsrichtung (7C) in einer Ecke des Sacklochs (P) vorgesehen ist, wo kein Haltevorsprung vorgesehen ist.

2. Rollenlagerkäfig nach Anspruch 1, wobei
die zentralen Führungsteilbereiche (5) der Stützen (4) benachbart zueinander mit einem Zwischenraum positioniert sind, der größer als ein Durchmesser eines in den Zwischenraum einzufügenden Teils der Rolle (15A; 15B) ist, wobei der Teil der Rolle (15A; 15B) einer Position des Zwischenraums zwischen den zentralen Führungsteilbereichen (5) in einer axialen Richtung entspricht.

3. Rollenlagerkäfig nach Anspruch 1 oder 2, wobei
der zentrale Führungsteilbereich (5) der Stütze (4) eines von folgendem hat:
eine Scherebene (B), die als Kontaktoberfläche (5A) dient, die eine Seitenoberfläche der Rolle (15A; 15B) kontaktiert, wobei die Scherebene (B) erzeugt wird, wenn das Sackloch (P) durch Stanzen ausgebildet wird, und
eine Oberfläche, die die Seitenoberfläche der Rolle (15A; 15B) kontaktiert, wobei die Oberfläche durch Pressen der Scherebene (B) vorbereitet wird.

## Revendications

1. Une cage de roulement à rouleaux pour maintenir en rotation, à un intervalle prédéterminé, des rouleaux (15A ; 15B) servant d'éléments roulants d'un roulement à rouleaux, la cage de roulement à rouleaux étant pourvue d'une pluralité de trous (P) formant poches à intervalles égaux dans une direction circonférentielle pour loger les rouleaux (15A ; 15B), dans laquelle
une pluralité de colonnes (4) relient une paire d'anneaux (11, 12) qui sont éloignés l'un de l'autre dans une direction axiale,
chacune des colonnes (4), qui est positionnée entre les trous (P) formant poches adjacents les uns aux autres, comprend :
une partie de guidage centrale (5) pour guider les rouleaux (15A ; 15B), la partie de guidage centrale (5) étant positionnée à un centre axial de la colonne (4) dans une zone située radialement à l'extérieur d'un diamètre de cercle primitif des rouleaux (15A ; 15B) ; et
une paire de portions d'extrémité (6, 7) dont chacune est reliée à la portion de guidage centrale (5) à une extrémité et à une bague correspondante parmi les bagues (11, 12) à l'autre extrémité dans la zone radialement extérieure de la portion de guidage centrale (5),
chacune des portions d'extrémité de la colonne (4) présente une saillie de retenue (6A) de sorte que la saillie de retenue (6A) soit positionnée, dans chacun des trous (P) formant poches, en diagonale opposée à une autre saillie de retenue (7A),
**caractérisée en ce que** :
une partie de dégagement (6B) de direction axiale est prévue, dans chacun des trous (P) formant poches, en diagonale opposée à une autre partie de dégagement (7B) de direction axiale dans un coin du trou formant poche (P) dans lequel la saillie de retenue est prévue, et
une partie de dégagement (6C) de direction circonférentielle est prévue, dans chacun des trous (P) formant poches, diagonalement opposée à une autre partie de dégagement (7C) de direction circonférentielle dans un coin du trou formant poche (P) dans lequel aucune saillie de retenue n'est prévue.

2. La cage de roulement à rouleaux selon la revendication 1, dans laquelle
les parties centrales de guidage (5) des colonnes (4) adjacentes les unes aux autres sont positionnées à un intervalle supérieur à un diamètre d'une partie du rouleau (15A ; 15B) à insérer dans l'intervalle, la partie du rouleau (15A ; 15B) correspondant à une position de l'intervalle entre les parties centrales de guidage (5) dans une direction axiale.

3. La cage de roulement à rouleaux selon la revendication 1 ou la revendication 2, dans laquelle
la partie centrale de guidage (5) de la colonne (4) a un parmi :
un plan de cisaillement (B) servant de surface de contact (5A) venant en contact avec une surface latérale du rouleau (15A ; 15B), le plan de cisaillement (B) étant généré lorsque le trou formant poche (P) est formé par poinçonnage, et
une surface en contact avec la surface latérale du rouleau (15A ; 15B), la surface étant préparée en appuyant sur le plan de cisaillement (B).
